# EUROPEAN PATENT SPECIFICATION

(11) **EP 3 019 565 B1**
(45) Date of publication and mention of the grant of the patent: **27.03.2019**
(21) Application number: 14742311.5
(22) Date of filing: 14.07.2014
(51) Int. Cl.: C09D 11/101, C09D 11/30

(54) **PRINTING INK**
DRUCKTINTE
ENCRE D'IMPRESSION

(30) Priority: 12.07.2013 GB 201312489; 02.10.2013 GB 201317475
(43) Date of publication of application: 18.05.2016
(73) Proprietor: Sericol Limited, Broadstairs, Kent CT10 2LE (GB)
(72) Inventor: BURNS, Kevin, Broadstairs Kent CT10 2LE (GB); NOUTARY, Carole, Broadstairs Kent CT10 2LE (GB); BIGGS,Scott, Broadstairs Kent CT10 2LE (GB)
(74) Representative: Elkington & Fife LLP
(86) International application number: PCT/GB2014/052150
(87) International publication number: WO 2015/004488

(56) References cited:
- EP-A1- 2 228 415
- WO-A1-2012/153867
- WO-A1-2012/172973
- WO-A1-2013/069580
- GB-A- 2 371 551
- JP-A- 2009 108 171
- JP-A- 2010 143 959
- JP-A- 2011 122 076
- JP-A- 2013 107 374

## Description

The present invention relates to a printing ink and in particular to an inkjet ink for printing onto food packaging.

Inkjet printing is an attractive technique for printing onto a wide-range of substrates on account of its flexibility and ease of use. However, food packaging represents a particular challenge on account of the strict limitations on the properties of materials which come into contact with food, including indirect additives like packaging inks. Specific exclusions include volatile organic solvents and many monomers typically used in inkjet inks based on their odour and/or migration properties.

WO 2012/172973 relates to an active energy ray-curable ink composition for inkjet recording, which is characterized in that (1) the ink composition contains 10-25% by mass of a polymerizable compound having one active energy ray-polymerizable group relative to the total mass of the active energy ray-polymerizable compound, while containing 75-90% by mass of a polymerizable compound having two or more active energy ray-polymerizable groups relative to the total mass of the active energy ray-polymerizable compound, (2) 10-20% by mass of N-vinyl-2-caprolactam is contained as the polymerizable compound having one active energy ray-polymerizable group, and (3) 15-35% by mass of (meth)acrylic acid 2-(2-vinyloxyethoxy)ethyl is contained as the polymerizable compound having two or more active energy ray-polymerizable groups.

EP 2 228 415 relates to an actinic energy radiation curable ink-jet ink containing a cationically polymerizable compound and a photo-cationic polymerization initiator, an actinic energy radiation curable ink-jet ink wherein a cationically polymerizable compound having a vinyl ether group as a reactive group is contained at 50.0% by mass or more and the halogen ion content is 1.0 µg/g of the ink - 100 µg/g of the ink.

JP 2011-122076 relates to an active ray-curable ink composition containing, at the least, a photoacid generator, polymerizable monomers and an oligomer or polymer having 100-10,000 weight-average molecular weight. A vinyl ether compound accounts for ≥50 mass% of the polymerizable monomers and the arithmetic mean logP of all the polymerizable monomers satisfies 1.5-3.5. The viscosity of the active ray-curable ink composition is 7-100 mPa-s at 25°C.

JP 2009-108171 relates to a photocuring ink composition containing a urethane oligomer and a vinyl ether.

WO 2013/069580 relates to a photopolymerizable inkjet ink, which contains photopolymerizable monomers containing at least one selected from the following compound group (A) compounds of which are negative for skin sensitization, and at least one selected from the following compound group (B) compounds of which are negative for skin sensitization, wherein the compound group (A) is a compound group consisting of caprolactone-modified dipentaerythritol hexaacrylate, polyethoxylated tetramethylol methane tetraacrylate, ethylene oxide-modified bisphenol A diacrylate, caprolactone-modified hydroxy pivalic acid neopentyl glycol diacrylate, polypropylene glycol diacrylate [CH₂=CH-CO-(OC₃H₆)ₙ-OCOCH=CH₂ (n≈12)], hydroxyethyl acryl amide, trimethylol propane trimethacrylate, and tricyclodecane dimethanol dimethacrylate, and the compound group (B); is a compound group consisting of ethylene oxide-modified phenolacrylate, isostearyl acrylate, ethylene oxide-modified trimethylol propane trimethacrylate, stearyl methacrylate, and glycerin dimethacrylate.

WO 2012/153867 relates to a photopolymerizable inkjet ink including: at least one selected from the group consisting of (meth)acrylic acid esters negative for skin sensitization and (meth)acrylamides negative for skin sensitization; and at least one selected from the group consisting of vinyl ethers negative for skin sensitization, t-butyl methacrylate negative for skin sensitization, n-pentyl methacrylate negative for skin sensitization, and n-hexyl methacrylate negative for skin sensitization.

JP 2013-107374 relates to an inkjet printing method including: a step of heating a photopolymerizable inkjet ink to 60-100°C; a step of ejecting the photopolymerizable inkjet ink to a recording medium; and a step of irradiating light to the photopolymerizable inkjet ink that is humidified and ejected and curing the inkjet ink. The ink includes either the (meth)acrylic acid ester and the vinylic ether, or the (meth)acrylic acid ester, the (meth)acrylic amido and the vinylic ether.

JP 2010-143959 relates to an active energy ray-curable inkjet ink containing a cationic polymerizable compound and a photopolymerization initiator. A vinyl ether polymerizable compound having a vinyl ether group as a reactive group accounts for ≥80 mass% of the total mass of the cationic polymerizable compound. Triethylene glycol divinyl ether or diethylene glycol divinyl ether is incorporated in the active energy ray-curable inkjet ink as the vinyl ether polymerizable compound. The active energy ray-curable inkjet ink contains at least one cationic polymerizable compound having ≥30 mPa s viscosity or a polymer or oligomer which has the dissolvability of dissolving ≥5 mass% of the total mass of the cationic polymerizable compound at -15°C and has ≥500 mPa s viscosity.

GB 2 371 551 relates to an ink containing a multifunctional acrylate monomer, a vinyl ether monomer and a photoinitiator.

There is therefore a need in the art for inkjet inks which can be printed directly onto food packaging, without compromising the printing and drying/curing properties of the ink.

Accordingly, the present invention provides an inkjet ink comprising:
an α,β-unsaturated ether monomer in which the only radiation-curable functional groups present in the monomer are α,β-unsaturated ether groups;
a radiation-curable oligomer and/or a passive resin and
a colouring agent;
wherein the ink contains less than 5% by weight of water and volatile organic solvents in total, and less than 10% by weight of mono- and di-functional monomers in total, other than the α,β-unsaturated ether monomer, where the amounts by weight are based on the total weight of the ink,
wherein the ink has a viscosity of less than 100 mPas at 25°C,
wherein the oligomer comprises a polyester backbone, and
wherein the ink cures by free-radical polymerisation.

Thus, the present invention provides an ink which has low odour and low migration and so is suitable for food packaging applications, but has a suitably low viscosity for inkjet printing and cures to provide a flexible and resilient film.

The ink contains at least one α,β-unsaturated ether monomer, typically a vinyl ether. Such components are known in the art. They include at least one α,β-unsaturated ether functional group which can undergo polymerisation during the curing process. In the α,β-unsaturated ether monomer, the only radiation-curable functional groups present in the monomer are α,β-unsaturated ether groups. By "radiation-curable" is meant that the material polymerises or crosslinks when exposed to actinic radiation, commonly ultraviolet light, in the presence of a photoinitiator. These monomers provide the necessary low odour and low migration properties for indirect food packaging applications.

α,β-Unsaturated ether monomers can polymerise by free-radical or cationic polymerisation. Examples include vinyl ethers such as triethylene glycol divinyl ether, diethylene glycol divinyl ether, 1,4-cyclohexanedimethanol divinyl ether and ethylene glycol monovinyl ether. Mixtures of α,β-unsaturated ether monomers may be used.

The α,β-unsaturated ether monomer preferably has a functionality of 1 to 6, more preferably 2 to 4.

The monomers used in the present invention typically have a molecular weight of less than 600, more preferably less than 400.

The α,β-unsaturated ether monomer is preferably present at 20-70% by weight, more preferably 30-50% by weight.

The ink also contains at least one radiation-curable oligomer and/or at least one passive resin.

Radiation-curable oligomers are known in the art. They include at least one functional group which can undergo polymerisation during the curing process. The function group is preferably a (meth)acrylate group. More preferably, the only radiation-curable functional groups present in the oligomer are (meth)acrylate groups. The term "radiation-curable" has the same meaning throughout as described hereinabove. Again, these oligomers provide the necessary low odour and low migration properties for indirect food packaging applications.

Oligomers typically have a molecular weight of 400 to 7,000, more preferably the lower limit is 600 and more preferably the upper limit is 5,000. Molecular weights (number average) can be calculated if the structure of the oligomer is known or molecular weights can be measured using gel permeation chromatography using polystyrene standards. Suitable oligomers for use in the present invention comprise a polyester backbone. The polymerisable group is preferably a (meth)acrylate group. Thus, in a preferred embodiment, the radiation-curable oligomer is a multifunctional (meth)acrylate oligomer.

The oligomer is preferably multifunctional. They preferably have a functionality of 2 to 30. In one embodiment, the functionality is preferably 2 to 6 and in another the functionality is 10 to 30. Preferred oligomers for use in the invention have a viscosity of 50 mPas to 20 Pas at 25°C, more preferably 0.5 to 15 Pas at 25°C. Oligomer viscosities can be measured using an ARG2 rheometer manufactured by T.A. Instruments, which uses a 40 mm oblique / 2° steel cone at 25°C with a shear rate of 25 seconds⁻¹.

Examples of oligomers suitable for use in the present invention are set out in Table 1.

**Table 1.**

| **Oligomer code** | **Description** | **MW** | **Viscosity (mPas at 25°C)** | **Functionality** |
|---|---|---|---|---|
| CN2560 | Polyester acrylate | 2,000 | 2,700 | 4 |
| CN2555 | Polyester acrylate | 3,000 | 8,500 | 4 |
| CN2305 | Hyperbranched polyester acrylate | 5,000 | 330 | 16 |

The term "(meth)acrylate" is intended herein to have its standard meaning, i.e. acrylate and/or methacrylate.

The radiation-curable oligomer is preferably present at 20-70% by weight, more preferably 30-50% by weight.

The ink may also contain a passive (or "inert") resin. Passive resins are resins which do not enter into the curing process, i.e. the resin is free of functional groups which polymerise under the radiation-curing conditions to which the ink is exposed. In other words, the resin is not a radiation-curable material. They can, however, include groups which react in other ways, such as by oxidative drying. The resin may be a thermoplastic or a thermosetting resin, but is preferably a thermoplastic resin. The resin may be selected from epoxy, polyester, vinyl, ketone, nitrocellulose, phenoxy or acrylate resins, or a mixture thereof and is preferably a poly(methyl (meth)acrylate) resin. In a preferred embodiment, the resin is a polyester resin. The resin has a weight-average molecular weight of 1,500-200,000, as determined by GPC with polystyrene standards as previously described hereinabove.

The passive (or "inert") resin is preferably present at 20-70% by weight, more preferably 30-50% by weight.

The combination of the above-described α,β-unsaturated ether monomer and (meth)acrylate oligomer obviates the need for many other components commonly required for proper printing and curing properties. Thus, the ink of the present invention contains less than 10% by weight of mono- and di-functional monomers in total, other than the α,β-unsaturated ether monomer. That is, apart from the α,β-unsaturated ether monomer defined hereinabove, the total quantity of mono- and di-functional monomers is less than 10% by weight. The terms "monofunctional" and "difunctional" have their standard meanings, namely one or two radiation-curable functional groups, respectively, which can take part in the polymerisation or crosslinking reaction when the ink is exposed to actinic radiation, commonly ultraviolet light, in the presence of a photoinitiator. Preferably the ink contains less than 5% by weight, more preferably less than 3%, of mono- and di-functional monomers in total, other than the α,β-unsaturated ether monomer.

Non-limiting examples of mono- and di-functional monomers whose presence is to be minimised are as follows: monofunctional (meth)acrylate monomers such as phenoxyethyl acrylate (PEA), cyclic TMP formal acrylate (CTFA), isobornyl acrylate (IBOA), tetrahydrofurfuryl acrylate (THFA), 2-(2-ethoxyethoxy)ethyl acrylate, octadecyl acrylate (ODA), tridecyl acrylate (TDA), isodecyl acrylate (IDA) and lauryl acrylate; difunctional (meth)acrylate monomers such as hexanediol diacrylate, polyethylene glycol diacrylate (for example tetraethylene glycol diacrylate), dipropylene glycol diacrylate, neopentyl glycol diacrylate, propoxylated neopentyl glycol diacrylate, hexanediol dimethacrylate, triethyleneglycol dimethacrylate, diethyleneglycol dimethacrylate, ethyleneglycol dimethacrylate and 1,4-butanediol dimethacrylate; and N-vinyl amides and N-(meth)acryloyl amines such as N-vinyl caprolactam (NVC), N-vinyl pyrrolidone (NVP) and N-acryloylmorpholine (ACMO).

The ink may contain a tri- or higher functionality (meth)acrylate monomer in which the only radiation-curable functional groups present in the monomer are acrylate groups. Examples of such components are acrylates such as trimethylolpropane triacrylate, pentaerythritol triacrylate, tri(propylene glycol) triacrylate, bis(pentaerythritol) hexaacrylate, ethoxylated trimethylolpropane triacrylate, and mixtures thereof. Suitable (meth)acrylate monomers also include esters of methacrylic acid (i.e. methacrylates), such as trimethylolpropane trimethacrylate. Mixtures of (meth)acrylates may also be used. However, in a preferred embodiment, the ink preferably contains less than 10% by weight of monomers, other than the α,β-unsaturated ether monomer. More preferably the ink contains less than 5% by weight and most preferably less than 3%, of monomers, other than the α,β-unsaturated ether monomer. That is, the α,β-unsaturated ether monomer is preferably the sole monomer present. Monomers typically have a molecular weight of less than 600, more preferably less than 400.

The ink also contains less than 5% by weight of water and volatile organic solvents in total, and more preferably less than 3%. Some water will typically be absorbed by the ink from the air and solvents may be present as impurities in the components of the inks, but such low levels are tolerated. The essential absence of water and volatile organic solvents means that the ink does not need to be dried to remove the water/solvent. It also avoids organic solvents which are unsuitable for food packaging applications. However, water and volatile organic solvents have a significant viscosity-lowering effect making formulation of the ink in the absence of such components significantly more challenging.

The coloured inks comprise at least one colouring agent. The colouring agent may be either dissolved or dispersed in the liquid medium of the ink. Preferably the colouring agent is a dispersible pigment, of the types known in the art and commercially available such as under the trade-names Paliotol (available from BASF pic), Cinquasia, Irgalite (both available from Ciba Speciality Chemicals) and Hostaperm (available from Clariant UK). The pigment may be of any desired colour such as, for example, Pigment Yellow 13, Pigment Yellow 83, Pigment Red 9, Pigment Red 184, Pigment Blue 15:3, Pigment Green 7, Pigment Violet 19, Pigment Black 7. Especially useful are black and the colours required for trichromatic process printing. Mixtures of pigments may be used.

In one aspect the following pigments are preferred. Cyan: phthalocyanine pigments such as Phthalocyanine blue 15.4. Yellow: azo pigments such as Pigment yellow 120, Pigment yellow 151 and Pigment yellow 155. Magenta: quinacridone pigments, such as Pigment violet 19 or mixed crystal quinacridones such as Cromophtal Jet magenta 2BC and Cinquasia RT-355D. Black: carbon black pigments such as Pigment black 7.

Pigment particles dispersed in the ink should be sufficiently small to allow the ink to pass through an inkjet nozzle, typically having a particle size less than 8 µm, preferably less than 5 µm, more preferably less than 1 µm and particularly preferably less than 0.5 µm.

The colorant is preferably present in an amount of 20% by weight or less, preferably 10% by weight or less, more preferably 8% by weight or less and most preferably 2 to 5% by weight. A higher concentration of pigment may be required for white inks, however, for example up to and including 30% by weight, or 25% by weight.

The inks may be in the form of an ink set comprising a cyan ink, a magenta ink, a yellow ink and a black ink (a so-called trichromatic set). The inks in a trichromatic set can be used to produce a wide range of colours and tones. Other inkjet ink sets may also be used, such as CMYK+white.

The inkjet ink exhibits a desirable low viscosity (100 mPas or less, more preferably 50 mPas or less and most preferably 35 mPas or less at 25°C).

The ink cures by free-radical polymerisation and optionally, cationic polymerisation.

To achieve the cure, the ink includes one or more photoinitiators, a free-radical and optionally a cationic photoinitiator, as appropriate.

The free-radical photoinitiator can be selected from any of those known in the art. For example, benzophenone, 1-hydroxycyclohexyl phenyl ketone, 1-[4-(2-hydroxyethoxy)-phenyl]-2-hydroxy-2-methyl-1-propane-1-one, 2-benzyl-2-dimethylamino-(4-morpholinophenyl)butan-1-one, isopropyl thioxanthone, benzil dimethylketal, bis(2,6-dimethylbenzoyl)-2,4,4-trimethylpentylphosphine oxide or mixtures thereof. Such photoinitiators are known and commercially available such as, for example, under the trade names Irgacure and Darocur (from Ciba) and Lucerin (from BASF).

In a preferred embodiment of the invention, the free-radical photoinitiator is a photoinitiator package comprising two or more free-radical photoinitiators. Preferably, the photoinitiator package comprises a phosphine oxide type photoinitiator and a hydroxy ketone type photoinitiator. More preferably, the photoinitiator package comprises a blend of a bis acyl phosphine oxide photoinitiator and an alpha hydroxy ketone photoinitiator. Most preferred photoinitiator package comprises a bis acyl phosphine oxide, a monofunctional alpha hydroxy ketone and a difunctional alpha hydroxy ketone.

In the case of a cationically curable system, any suitable cationic initiator can be used, for example sulfonium or iodonium based systems. Non limiting examples include: Rhodorsil PI 2074 from Rhodia; MC AA, MC BB, MC CC, MC CC PF, MC SD from Siber Hegner; UV9380c from Alfa Chemicals; Uvacure 1590 from UCB Chemicals; and Esacure 1064 from Lamberti spa.

Preferably the photoinitiator is present in an amount of 1 to 20% by weight, preferably 4 to 10% by weight based on the total weight of the ink. In a preferred embodiment, the photoinitiator package comprises bis acyl phosphine oxide, a monofunctional alpha hydroxy ketone and a difunctional alpha hydroxy ketone in a ratio of 3 to 5 parts by weight bis acyl phosphine oxide : 2 to 4 parts by weight monofunctional alpha hydroxy ketone : 2.4 to 4.5 parts by weight difunctional alpha hydroxy ketone. More preferably, the photoinitiator package comprises bis acyl phosphine oxide, a monofunctional alpha hydroxy ketone and a difunctional alpha hydroxy ketone in a ratio of 4 parts by weight bis acyl phosphine oxide : 3 parts by weight monofunctional alpha hydroxy ketone : 3.5 parts by weight difunctional alpha hydroxy ketone.

The amounts by weight provided herein are based on the total weight of the ink, unless context indicates otherwise.

Other components of types known in the art may be present in the ink to improve the properties or performance. These components may be, for example, surfactants, defoamers, dispersants, synergists for the photoinitiator, stabilisers against deterioration by heat or light, reodorants, flow or slip aids, biocides and identifying tracers.

The ink may be prepared by known methods such as stirring with a high-speed water-cooled stirrer, or milling on a horizontal bead-mill.

The printing is performed by inkjet printing, e.g. on a single-pass inkjet printer, for example for printing (directly) onto packaging, such as food packaging. The inks are exposed to actinic (often UV) radiation to cure the ink. The exposure to actinic radiation may be performed in an inert atmosphere, e.g. using a gas such as nitrogen, in order to assist curing of the ink.

Accordingly, the present invention further provides a method of inkjet printing comprising inkjet printing the inkjet ink as defined herein onto a substrate and curing the ink.

The present invention also provides a cartridge containing the inkjet ink as defined herein. It also provides a printed substrate having the ink as defined herein printed thereon. Suitable substrates are food packaging. Food packaging is typically formed of flexible and rigid plastics (e.g. food-grade polystyrene and PE/PP films), paper and board (e.g. corrugated board).

Any of the sources of actinic radiation discussed herein may be used for the irradiation of the inkjet ink. A suitable dose would be greater than 200 mJ/cm², more preferably at least 300 mJ/cm² and most preferably at least 500 mJ/cm². The upper limit is less relevant and will be limited only by the commercial factor that more powerful radiation sources increase cost. A typical upper limit would be 5 J/cm². Further details of the printing and curing process are provided in WO 2012/110815.

The invention will now be described with reference to the following examples, which are not intended to be limiting.

### Examples

### Example 1

Inks, as detailed in Table 2, were prepared by mixing the components in the given amounts. Amounts are given as weight percentages based on the total weight of the ink.

**Table 2**

| **Component** | **Function** | **Ink 1** | **Ink 2** |
|---|---|---|---|
| Polyester acrylate oligomer with functionality of 16 and MW of 5,000 (CN2305 from Arkema) | Reactive film former | 45.00 | 41.50 |
| 3,6,9,12-tetraoxatetradeca-1,13-diene | Reactive carrier | 43.10 | 43.10 |
| Poly[oxy(methyl-1,2-ethanediyl)],alpha,alpha,alpha-1,2,3-propanetriyltris[omega-[1-oxo-2-propen-1-yl]oxy]- and 2,6-bis(1,1-dimethylethyl)-4-(phenylenemethylene)cyclohexa-2,5-dien-1-one | Stabiliser | 0.58 | 0.58 |
| 2-hydroxy-1[4-(4-2-hydroxy-2-methylpropionyl)phenoxy)phenyl]-2-methylpropan-1-one | Radical photoinitiator | - | 3.50 |
| 2-hydroxy-1-[4-(2-hydroxyethoxy)phenyl]-2-methyl-1-propanone | Radical photoinitiator | 3.00 | 3.00 |
| Phenyl bis(2,4,6-trimethylbenzoyl)-phosphine oxide | Radical photoinitiator | 4.00 | 4.00 |
| Copper phthalocyanine pigment | Pigment | 2.49 | 2.49 |
| Polyether-modified polydimethylsiloxane | Surfactant | 1.00 | 1.00 |
| Polyester-polyamide resin | Dispersant | 0.83 | 0.83 |
| | Total | 100.00 | 100.00 |

### Example 2

The viscosity of the inks was measured using a Brookfield viscometer fitted with a thermostatically controlled cup and spindle arrangement, here a DV1 low-viscosity viscometer. The viscosity of both inks was measured as less than 30.0 mPas at 25°C.

### Example 3

The inks had a low odour. The test for the suitability for indirect food packaging in terms of low migration is as follows. The inks are printed and cured onto a plastic substrate and tested for specific migration according to EU 10/2011 using food simulants. The inks of the present invention are suitable for such use.

## Claims

1. An inkjet ink comprising:
an α,β-unsaturated ether monomer in which the only radiation-curable functional groups present in the monomer are α,β-unsaturated ether groups;
a radiation-curable oligomer and/or a passive resin and
a colouring agent;
wherein the ink contains less than 5% by weight of water and volatile organic solvents in total, and less than 10% by weight of mono- and di-functional monomers in total, other than the α,β-unsaturated ether monomer, where the amounts by weight are based on the total weight of the ink,
wherein the ink has a viscosity of less than 100 mPas at 25°C,
wherein the oligomer comprises a polyester backbone, and
wherein the ink cures by free-radical polymerisation.

2. An inkjet ink as claimed in claim 1, wherein the ink contains less than 10% by weight of monomers, other than the α,β-unsaturated ether monomer.

3. An inkjet ink as claimed in claims 1 or 2, wherein the α,β-unsaturated ether monomer and the oligomer are the only radiation-curable components present in the ink.

4. An inkjet ink as claimed in any preceding claim, wherein the α,β-unsaturated ether monomer has a functionality of 1 to 6.

5. An inkjet ink as claimed in claim 4, wherein the α,β-unsaturated ether monomer has a functionality of 2 to 4.

6. An inkjet ink as claimed in any preceding claim, wherein the oligomer is a multifunctional oligomer.

7. An inkjet ink as claimed in any preceding claim, wherein the α,β-unsaturated ether monomer is present at 20-70% by weight.

8. An inkjet ink as claimed in any preceding claim, wherein the oligomer is present at 20-70% by weight.

9. A cartridge containing the inkjet ink as claimed in any preceding claim.

10. A printed substrate having the ink as claimed in any of claims 1-8 printed thereon.

11. A printed substrate as claimed in claim 10, wherein the substrate is food packaging.

12. A method of inkjet printing comprising inkjet printing the inkjet ink as claimed in any of claims 1-8 onto a substrate and curing the ink.

13. A method as claimed in claim 12, wherein the substrate is a food packaging.

## Patentansprüche

1. Tintenstrahltinte, umfassend:
ein α,β-ungesättigter Ethermonomer, in dem die einzigen im Monomer vorhandenen strahlungshärtbaren Funktionsgruppen α,β-ungesättigte Ethergruppen sind;
ein strahlungshärtbares Oligomer und/oder ein passives Harz und
ein Färbemittel;
wobei die Tinte insgesamt weniger als 5 Gew.-% Wasser und volatile organische Lösemittel und außer dem α,β-ungesättigten Ethermonomer insgesamt weniger als 10 Gew.-% mono- und difunktionale Monomere enthält, wobei die Gewichtsprozente auf dem Gesamtgewicht der Tinte basieren,
wobei die Tinte eine Viskosität von weniger als 100 mPas bei 25°C aufweist,
wobei das Oligomer ein Polyesterrückgrat umfasst und
wobei die Tinte durch Polymerisation freier Radikale aushärtet.

2. Tintenstrahltinte nach Anspruch 1, wobei die Tinte außer dem α,β-ungesättigten Ethermonomer weniger als 10 Gew.-% Monomere enthält.

3. Tintenstrahltinte nach einem der Ansprüche 1 oder 2, wobei das α,β-ungesättigte Ethermonomer und das Oligomer die einzigen in der Tinte vorhandenen strahlungshärtbaren Komponenten sind.

4. Tintenstrahltinte nach einem der vorstehenden Ansprüche, wobei das α,β-ungesättigte Ethermonomer eine Funktionalität von 1 bis 6 aufweist.

5. Tintenstrahltinte nach Anspruch 4, wobei das α,β-ungesättigte Ethermonomer eine Funktionalität von 2 bis 4 aufweist

6. Tintenstrahltinte nach einem der vorstehenden Ansprüche, wobei das Oligomer ein multifunktionales Oligomer ist.

7. Tintenstrahltinte nach einem der vorstehenden Ansprüche, wobei das α,β-ungesättigte Ethermonomer mit 20 bis 70 Gew.-% vorhanden ist.

8. Tintenstrahltinte nach einem der vorstehenden Ansprüche, wobei das Oligomer mit 20 bis 70 Gew.-% vorhanden ist.

9. Patrone, enthaltend die Tintenstrahltinte nach einem der vorstehenden Ansprüche.

10. Bedruckter Träger, der darauf aufgedruckt die Tinte nach einem der Ansprüche 1 bis 8 aufweist.

11. Bedruckter Träger nach Anspruch 10, wobei der Träger eine Nahrungsmittelverpackung ist.

12. Verfahren zum Tintenstrahldrucken, umfassend das Tintenstrahldrucken der Tintenstrahltinte nach einem der Ansprüche 1 bis 8 auf einen Träger und Härten der Tinte.

13. Verfahren nach Anspruch 12, wobei der Träger eine Nahrungsmittelverpackung ist.

## Revendications

1. Encre pour jet d'encre comprenant :
un monomère d'éther α,β-insaturé dans lequel les seuls groupes fonctionnels durcissables par rayonnement présents dans le monomère sont des groupes d'éther α,β-insaturés ; un oligomère durcissable par rayonnement et/ou une résine passive et un agent de coloration ;
dans laquelle l'encre contient moins de 5 % en poids d'eau et de solvants organiques volatils au total, et
moins de 10 % en poids de monomères mono- et di-fonctionnels au total, autres que le monomère d'éther α,β-insaturé,
où les quantités en poids sont basées sur le poids total de l'encre,
dans laquelle l'encre a une viscosité de moins de 100 mPas à 25° C,
dans laquelle l'oligomère comprend un squelette polyester, et
dans laquelle l'encre durcit par polymérisation des radicaux libres.

2. Encre pour jet d'encre selon la revendication 1, dans laquelle l'encre contient moins de 10 % en poids de monomères, autres que le monomère d'éther α,β-insaturé.

3. Encre pour jet d'encre selon la revendication 1 ou 2, dans laquelle le monomère d'éther α,β-insaturé et l'oligomère sont les seuls composants durcissables par rayonnement présents dans l'encre.

4. Encre pour jet d'encre selon l'une quelconque des revendications précédentes, dans laquelle le monomère d'éther α,β-insaturé a une fonctionnalité de 1 à 6.

5. Encre pour jet d'encre selon la revendication 4, dans laquelle le monomère d'éther α,β-insaturé a une fonctionnalité de 2 à 4.

6. Encre pour jet d'encre selon l'une quelconque des revendications précédentes, dans laquelle l'oligomère est un oligomère multifonctionnel.

7. Encre pour jet d'encre selon l'une quelconque des revendications précédentes, dans laquelle le monomère d'éther α,β-insaturé est présent à 20 à 70 % en poids.

8. Encre pour jet d'encre selon l'une quelconque des revendications précédentes, dans laquelle l'oligomère est présent à 20 à 70 % en poids.

9. Cartouche contenant l'encre pour jet d'encre selon l'une quelconque des revendications précédentes.

10. Substrat imprimé ayant l'encre selon l'une quelconque des revendications 1 à 8 imprimée sur celui-ci.

11. Substrat imprimé selon la revendication 10, dans lequel le substrat est un emballage alimentaire.

12. Procédé d'impression jet d'encre comprenant l'impression jet d'encre de l'encre pour jet d'encre selon l'une quelconque des revendications 1 à 8 sur un substrat et le durcissement de l'encre.

13. Procédé selon la revendication 12, dans lequel le substrat est un emballage alimentaire.
